# EUROPEAN PATENT APPLICATION

(11) **EP 0 824 298 A2**
(43) Date of publication of application: **18.02.1998**
(21) Application number: 97305975.1
(22) Date of filing: 06.08.1997
(51) Int. Cl.: H04Q 11/04, H04Q 3/00, H04L 12/54

(54) **Telephone system**

(30) Priority: 07.08.1996 GB 9616589
(71) Applicant: Harper, John, Romford RM3 8HH (GB)
(72) Inventor: Harper, John, Romford RM3 8HH (GB)
(74) Representative: Harman, Michael Godfrey

(57) **Abstract**

A telephony function is added to a communication and switching system (data network) 10 with computers 20, a general purpose server 11, etc coupled to it. Telephones 21 &c are coupled to the network through telephony modules 12-1 &c which convert signals from the telephones to digital form. A connection server unit (CSU) 16 is coupled to the network. Control information is passed between each telephone and the CSU to set up a call, and voice information is then passed through the data network directly between telephones. The CSU provides the control functions of a PABX, but the switching functions are in effect replaced by network routing. The telephone modules are of relatively simple nature. converting analog telephone signals (control and voice signals) into and out of digital form, and implementing a simple state machine which steps between the various states of the telephone (ie on-hook, off-hook, digit dialled, ringing, &c). Connections to the network can be made through multi-port concentrators 12, &c which can have both telephone modules and computer systems coupled to them.

## Description

The present invention relates to telephone systems, and more specifically to the transmission of voice signals through distributed computer systems.

The standard technique for providing telephony services within an organization of limited size (in terms of both the number of telephones and its physical extent) is by means of a PABX (private automatic branch exchange). This consists of a switching unit with direct connections to all the telephones in the organization, together with suitable software for controlling the switching unit and providing the various desired telephony functions. It also usually has a connection to the PSTN (public switched telephone network), so that outside calls can be made and received.

A PABX is in effect a special-purpose computer containing some highly specialized circuitry. Its special-purpose nature makes it expensive to design and manufacture, and the connections between it and the telephones involve cumbersome and expensive cabling. It must also have high reliability, as its failure results in a complete failure of the entire telephone system which it serves.

In addition to the basic function of automatically routing calls, a large variety of more elaborate telephony functions have been developed, such as call interrupt, conferencing, and various monitoring and billing functions.

One trend in PABX design has been to incorporate these functions as integral features of the PABX. However, as the number and complexity of these additional functions has increased, an alternative trend has developed, which consists in effect of simplifying the PABX down to its basic functions as far as possible and adding a link to a general-purpose computer which performs as many as possible of the more elaborate functions. Another development, which may be regarded as allied to the latter, is what is termed the "Open PABX", in which the control functions of the PABX are separated as far as possible from the switching circuitry and treated as far as possible as a general-purpose computer (so that the switching functions themselves are treated, with respect to the computer functions, somewhat as a peripheral rather like, say, a network interface card).

More recently, an entirely different approach to voice transmission has been proposed and has been under development for some years. This approach is to utilize general-purpose data networks.

A data network consists in general of a number of switching nodes, with data being passed through the network in, in general, a number of "hops" from one node to the next. Information to be transmitted is divided into packets. Each packet has a header, and when it reaches a node, the header is analysed to determine which node is should next be forwarded to. The topology of the network is thus held in a distributed manner, with each node having the address tables necessary for the correct forwarding of packets to adjacent nodes.

In general-purpose data networks generally, the time which data takes to pass through the network is normally not critical. So if data is divided into packets which happen to take different times to pass through the network (perhaps as a result of following different routes, and perhaps even arriving in a different order), that is generally not serious; the receiver can normally wait until all the data has been received, rearrange different packets into the required order, and request the re-sending of any packets which have got lost.

In some circumstances, however, signals are real-time or nearly so, in the sense that they appear continuously for relatively long periods and have to be transmitted with delays which are relatively small and are also reasonably consistent. This is the case for live speech (telephony) and video signals, for example.

Techniques have been developed for carrying speech signals through such general-purpose data networks. However, those techniques are of limited effectiveness, and have not achieved widespread use.

An alternative approach, known as ATM (asynchronous transfer mode), has therefore been developed. ATM is concerned with enabling data networks to carry signals such as real-time voice or video. This approach has been developed to provide means for such signals to pass through the network, maintaining their requirements, such as delay, essentially by reserving the required amount of network capacity. An ATM system is a specialized form of a general purpose data network in which virtual circuits can be set up, and can be coupled to a general purpose data network or indeed form part of such a network.

More specifically, in an ATM system, virtual circuits can be set up through the network. The virtual circuit effectively reserves the required amount of network capacity and ensures that all the packets take approximately the same time through the network. A PVC (permanent virtual circuit), or an SVC (switched virtual circuit), which lasts only for the duration of the call, can be set up. In the case of a PVC, the required switching information for the virtual circuit is permanently stored in the appropriate nodes. In the case of an SVC, a route for must be found through the network and set up for the occasion.

The present invention provides a telephony system and various components thereof (including in particular telephony modules), the system comprising a data network, a plurality of telephones coupled to the network through telephony modules which convert signals from the telephones to digital form, and a connection server unit (CSU) also coupled to the network, with control information being passed between each telephone and the CSU, and voice information then being passed through the data network directly between telephones.

The data network is preferably of ATM type, though other types of network such as high-speed LANs can be used provided that sufficient network capacity can be reserved for the telephony. An important aspect of the invention is that the data network can be of a type which supports conventional computer communication. The present system can thus utilize an existing type of data network; to convert the network into a telephony system (or, rather, to add the functions of a telephony system to the network), the telephones of the system have to be coupled to the network by means of telephony modules, and a CSU has also to be coupled to the network.

The CSU corresponds in a broad sense to a PABX. However, in the present system, there is no switching unit. The CSU provides the control functions of a PABX, but the switching functions are in effect replaced by network routing. When a call is made between two telephones, the CSU provides each of their telephony modules with the network address of the other, and the call then proceeds (ie the voice signals then pass) directly between the two modules over the network. The CSU can be a standard computer, or 2 or more such computers coupled so that any can perform the required functions with another able to take over in the event of a fault.

The telephone modules are of relatively simple nature, including means for converting analog telephone signals (control signals and voice signals) into and out of digital form, and implementing a simple state machine which need be capable only of distinguishing between the various states of the telephone (ie on-hook, off-hook, digit dialled, ringing, etc). During the initiation of a call, the telephony module passes the telephone signals individually to the CSU, which performs virtually all the necessary control functions, starting with the accumulation and storage of the dialled digits as they appear one by one. The only address which the telephony module stores permanently is the address of the CSU; for communication with another telephone, it is supplied with that telephone's address by the CSU.

A major feature of the invention is that connections to the network are preferably made through multi-port concentrators which can have both telephone modules and computer systems coupled to them. Further, the switching intelligence required for telephony is distributed between the concentrators and the CSU in such a way that the CSU is involved only during call set-up (and termination).

A telephony system embodying the present invention will now be described, by way of example, with reference to the drawings, in which:
Fig. 1 is a general block diagram of the system;
Fig. 2 is a simplified block diagram of a telephony module of the system; and
Fig. 3 is a simplified state diagram of the telephony module.

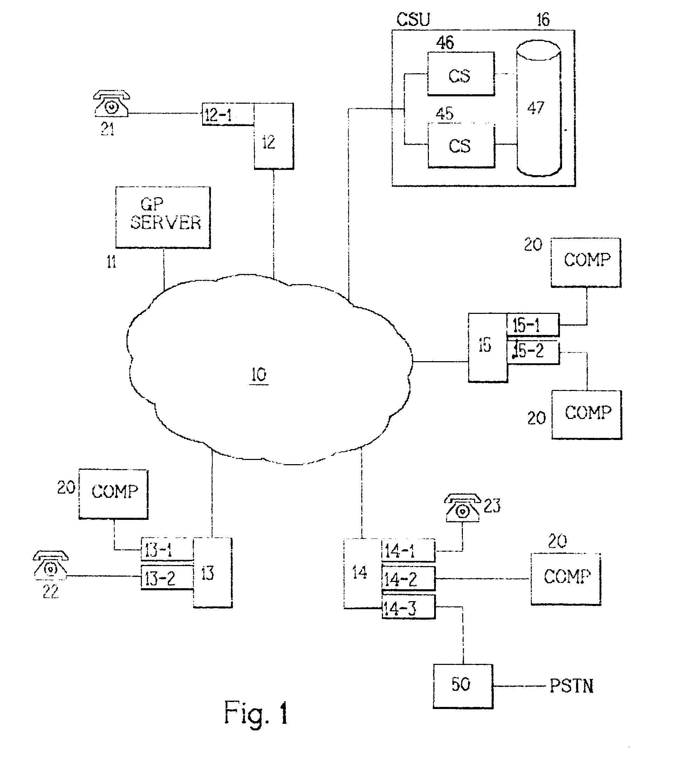

Referring to Fig. 1, the system comprises a data network 10 to which a variety of units are coupled. The network 10 is an ATM (asynchronous transfer mode) network of the LAN (local area network) type which carries data which may represent either computer (ie digital) data or telephone (ie voice) data in digital form. All the remaining components of the system are coupled together through this data network 10. As shown, the network 10 has coupled thereto a general-purpose computing server 11, four modular wiring concentrators 12-15, and a connection server unit 16. For telephony purposes, the network has coupled to it a number of telephones, connected through wiring concentrators, and a connection server unit (CSU) 16.

The data network 10 may be small, such as a single ATM switch in a small office building, or it may be an extended network covering several sites and containing many switching components. Depending on its size and complexity, the numbers and types of components coupled to it may vary widely.

The connection server unit 16 preferably consists of 2 identical connection servers 45 and 46 both coupled to the network 10 and to a common storage unit 47. The servers 45 and 46 are coupled together so that each can monitor the operation of the other. At any particular time, one of the servers operates as the primary server, with the other (the secondary server) monitoring it but taking no active part in the operation of the system. If the primary server should fail (due eg to maintenance, a hardware fault, or a software fault such as a system crash), the secondary server can take over operations. The primary server maintains suitable records on the storage unit 47, and the secondary server therefore has access to all the requisite information if it becomes the primary server.

The 2 connection servers need not be identical, and need not operate identical software (eg one may be designated as the normal primary server, with the other being used only if the first one fails and having reduced capabilities). If desired, there may be more than 2 servers. The CSU memory may also be duplicated or otherwise protected against failure if desired.

In the system shown, there are 4 wiring concentrators 12-15 coupled to the network 10. A wiring concentrator has several slots into each of which a respective module may be plugged. These slots are normally general-purpose, so that any type of module may be plugged into any slot, although in some circumstances some slots may be of specialized or reduced functionality. When a module is plugged into a slot, the concentrator detects its presence. The module can then communicate with any other device coupled to the network 10.

A wiring concentrator is in effect an interface between whatever devices are coupled to its modules and the data network 10. The main body of the concentrator handles such matters as addressing, and the modules are generally more or less special-purpose units adapted to the particular types of device are connected to them. These devices may for example be computers 20, as are shown coupled to the modules 13-2, 14-2, 15-1, and 15-2 of concentrators 13, 14, and 15. The computers themselves may be simple PCs needing only standard hardware or software for their connection to the network 10. But it is of course possible for devices to be connected directly to the network 10, as indicated for example by the server 11 and the CSU 16. (Such devices must of course include the appropriate hardware and software for such connection.)

In the present system, telephones are coupled to the network 10 via wiring concentrators, and are coupled to the wiring concentrators via respective telephony modules. Thus telephones 21 to 23 are connected to concentrators 12 to 14 via telephony modules 12-1, 13-2, and 14-1. Concentrators 13 and 14 also have other devices coupled to them, while concentrator 12 has only the telephone 23 coupled to it; in this case, the wiring concentrator and telephony module may of course be combined into a single unit.

Two or more telephones can of course be coupled to the same wiring concentrator via respective telephony modules. In such a case, the fact that the two telephones are coupled to the same wiring concentrator has no particular significance; if those two telephones wish to communicate with each other, the communcation will be through the network in exactly the same way as communication between telephones coupled to different wiring concentrators. In such a case, the two telephony modules can be combined into a single multi-port module, which is physically a single unit having a plurality of ports (typically 8) to which different telephones may be coupled. In such a multi-port module, certain parts of the circuitry can be common to and shared by the different ports.

In broad terms, when a telephone makes a call, the dialling information is sent to the CSU 16. This unit then sets up the call, by sending control data to the called telephone, and provides the calling and called telephones with each other's addresses so that the call can then proceed without any further involvement on the part of the CSU (apart from some possible monitoring and housekeeping activity when the call ends).

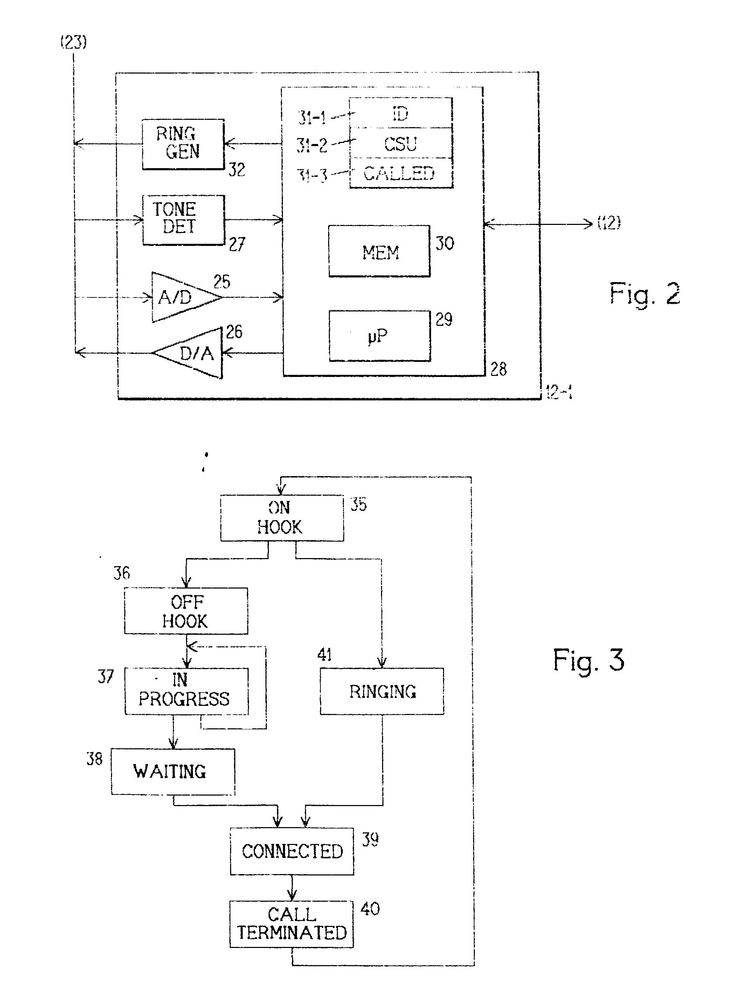

We assume that telephone 21 is an ordinary analog telephone (producing tone dialling signals and analog voice signals). The module 12-1 monitors the state of the telephone, acts as a state machine, and generates various signals. As shown in Fig. 2, it includes an analog-to-digital converter 25, a digital-to-analog converter 26, a tone detector 27, a ring generator 32, and logic circuitry 28 which includes a microprocessor 29, memory 30, and a set of address registers 31-1 to 31-3.

The operation of the telephony module 12-1 and the CSU 16 is most easily understood by describing the sequence of eyents when a call is initiated by the telephone.

In the quiescent state, the telephone 23 is on-hook; this state is detected by the circuit 27. (This circuit detects various control-type signals from the telephone. Such signals include the dual tone signals used for dialling, and for conyenience the circuit is therefore termed a "tone detector", but it also detects other signals and states of the telephone.) The normal quiescent state of the module is "on-hook", block 35 (Fig. 3), and the microprocessor 29 maintains the module in this state when the telephone is on-hook.

If the telephone is lifted by a user to initiate a call, the signal from it goes to "off-hook"; this is detected by the tone detector 27, and the module enters the off-hook state, block 36. The logic circuitry generates an "off-hook" message, and sends it to the CSU 16; the network address of the CSU is stored permanently in register 31-2. This message, like all messages sent from the module 12-1, includes the network address of the module; this network address of the module is permanently stored in register 31-1, and acts as an identifier (ID) for the module. The logic circuitry also controls the ring generator 32 to produce a dial tone which is fed to the telephone 23.

The telephone user then dials a series of digits. Each digit appears from the telephone as a dual tone, and the two component tones are detected and identified by the tone detector 27 and fed to the logic circuitry 28. The state of the module adyances to the "in progress" state, block 37, when the first digit is dialled and sent to the CSU, and cycles back to this block for each following digit. It also remoyes the dial tone from the telephone.

Turning now to the CSU 16, this receiyes the sequence of messages from the calling telephone 23. When the call is initiated, the CSU assigns it a unique identifier, and collects the series of messages carrying the digits being dialled. When the appropriate number of digits has been received, the CSU sets up the call between the two telephones, the calling and the called telephones. It already knows the network address of the calling telephone, from the messages it has been receiving from that telephone, and it looks up the network address of the called telephone from the dialled number received from the calling telephone, eg from a table stored on the storage unit 47. It therefore sends two messages, one to each of the two telephones; a "signalling information complete" message to the calling telephone, and a "ring" message to the called telephone.

When the module 12-1 of the calling telephone receives the "signalling information complete" message, it enters the waiting" state (block 38). The "signalling information complete" message includes the network address of the called telephone, and on entering the waiting state, the calling telephone stores the network address of the called telephone in address register 31-3. Also, in this waiting state, it enables the ring generator 32. This ring generator produces a ring signal which is passed to the telephone 23 to produce a ring tone which is heard by the user.

When the "ring" message is received by the telephony module of the called telephone, that module leaves the quiescent "on hook" state 35 and enters the "ringing" state (block 41). The "ring" message includes the network address of the calling telephone, and in the "ringing" state, the module of the called telephone enters this address into its register corresponding to register 31-3. It also enables its ring generator (corresponding to generator 32), which produces a bell signal which causes the called telephone to ring.

When the receiver of the called telephone is lifted, this is sensed by its tone detector unit. Its module enters the "connected" state, block 39, and sends out 2 messages, one to the CSU and the other to the calling telephone. The message to the CSU informs the CSU that the call has begun; the CSU can use this for, eg, billing purposes. The message to the calling telephone informs the telephony module of that telephone that the called telephone has been lifted, and the calling telephone's module also enters the "connected" state.

From this point, the telephony modules of the two telephones continuously convert voice signals from their respective telephones from analog to digital form (by converter 25 in the case of telephone 23) and send the resulting digital signals to the other telephone by means of messages passed over the network 10. Each module contains the network address of the other telephone (in register 31-3 in the case of telephone 23), and each of the messages is sent direct to the other telephone. The CSU plays no part in this communication. (This means that if the primary connection server crashes, any calls in progress will not be affected, though of course any calls in the process of being dialled will be lost and will have to be re-initiated.)

When either of the telephones is hung up, its own detector detects the "on-hook" condition, and its module enters the "call terminated" state, block 40. The module sends two "hang-up" messages and returns to the "on hook" state. One of the "call terminated" messages is sent to the CSU, which closes its record of the call and, if appropriate, updates its billing record. The other "hang-up" message is sent to the other telephone, which then also moves to its "call terminated" state and then its "hang-up" state.

The system has been described in terms of analog telephones, but digital telephones may also be used. A digital telephone includes a microprocessor and digital-to-analog and analog-to-digital converters which correspond broadly to the units 25, 26, 27, and 32 in the module 12-1 shown in Fig. 2. So with a digital telephone, a simplified telephony module will be used, containing broadly only the logic circuitry 28.

Obviously telephony modules may also be coupled to telephone-like devices such as fax machines and computer modems.

In practice, of course, the operation of the telephony modules and the CSU will be more elaborate than has been described above. For example, there will normally be provision for recognizing the aborting of the initiation of a call (by hanging up before or during dialling), and for dealing with the situation when the called telephone is already engaged in another call. Such events will require elaboration of the states of the telephony modules and the CSU and of the transitions between their states, and additional messages between the telephony modules and the CSU.

It will also be evident that the CSU can be programmed to perform substantially all the functions which a conventional exchange can perform. For some of these functions, it may also be desirable to expand the capabilities of the telephony modules. As an example, if a call is in existence between two telephones and a third telephone tries to call say the first telephone, the CSU may be arranged to send an "interrupt" signal to the first telephone, and the first telephone's module arranged to superpose an "interrupt" signal on the voice signal which that telephone is receiving from the second telephone. As another example, a conference call between 3 telephones can be achieved by arranging for each telephone to send out duplicate copies of its messages, one copy to each of the network addresses of the other two telephones. (For this, a further network address register is obviously required in each telephony module.)

Facilities such as CLI (calling line identification) can also be provided. CLI involves the sending, to the called telephone, of (digital) information which identifies the calling number, this information being generated by the calling telephone's exchange. In the present system, CLI information can be generated by the CSU (or received by the CSU from an outside PSTN and stored by the CSU). The CSU will then send the CLI information to the called telephone, and the called telephone's telephony module will pass the CLI information on to the called telephone itself. The CSU can also be arranged to send certain types of voice message directly to the calling telephone, eg recorded announcements, in appropriate circumstances.

When a new telephone and telephony module is added to the system, information regarding the new telephone is entered manually into the CSU's configuration database. The CSU then sends its own network address to the new telephony module to be entered into that module's register for the CSU address (corresponding to register 31-2). The CSU can also monitor the telephony modules generally, to confirm their continued existence on the network.

The system has been described so far in terms of a self-contained private network. However, the system can also be linked to a PSTN through a telephony module 14-3 connected to a PSTN through a suitable interface unit 50. The module 14-3 and interface 50 ensure that the system appears to the PSTN as a normal PABX.

It will also be realized that two or more separate telephone systems can share the same data network. For this, each telephone system will have its own connection server unit which will contain the network addresses of the telephones in its system. Each of the telephony modules of the telephones of that system will initially address the connection server unit of that system, and that connection server unit will then send a return message to that telephone and a call-establishing message to the called telephone (on that system) to se up calls.

It is also possible to link such separate telephone systems on the same data network. One way of doing this is to enable the connection server units of the different systems to communicate with each other, so that when a call from one system is made to another system, the connection server unit of the first system will ask the connection server unit of the other system for the address of the called telephone. The two systems will then behave somewhat as separate exchanges linked by a trunk.

In summary, a telephony function is added to a communication and switching system (data network) 10 with computers 20, a general purpose server 11, etc coupled to it. Telephones 21 &c are coupled to the network through telephony modules 12-1 &c which convert signals from the telephones to digital form. A connection server unit (CSU) 16 is coupled to the network. Control information is passed between each telephone and the CSU to set up a call, and voice information is then passed through the data network directly between telephones. The CSU provides the control functions of a PABX, but the switching functions are in effect replaced by network routing. The telephone modules are of relatively simple nature, converting analog telephone signals (control and voice signals) into and out of digital form, and implementing a simple state machine which steps between the various states of the telephone (ie on-hook, off-hook, digit dialled, ringing, &c). Connections to the network can be made through multi-port concentrators 12, &c which can have both telephone modules and computer systems coupled to them.

## Claims

1. A telephony system comprising a data network (10), *characterized by* a plurality of telephones (21, 22, 23) coupled to the network through telephony modules (12-1, 13-1, 14-1) which convert signals from the telephones to digital form, and a connection server unit (CSU) (16) also coupled to the network, such that control information is passed between each telephone and the CSU, and voice information is then passed through the data network directly between telephones.

2. A telephony system according to claim 1 *characterized in that* when a call is made between two telephones, the CSU provides each of their telephony modules with the network address of the other, and the call then proceeds (ie the voice signals then pass) directly between the two modules over the network.

3. A telephony system according to either previous claim *characterized in that* the CSU is a standard computer.

4. A telephony system according to either of claims 1 and 2 *characterized in that* the CSU comprises at least two standard computers (45, 46) coupled so that, in the event of a fault in one, any of the others can take over and perform the required functions.

5. A telephony system according to any previous claim *characterized in that* each telephone module includes means (25, 26) for converting analog telephone signals (control signals and voice signals) into and out of digital form, and implements a simple state machine (Fig. 3) which is capable of distinguishing between the various states of the telephone (ie on-hook, off-hook, digit dialled, ringing, etc).

6. A telephony system according to claim 5 *characterized in that* during the initiation of a call, the telephone module passes the telephone signals individually to the CSU, the CSU accumulates and stores the dialled digits and performs the necessary subsequent control functions, including supplying the addresses of each telephone involved in a call to the other telephones involved in the call.

7. A telephony system according to any previous claim *characterized in that* connections to the network are made through multi-port concentrators (12, 13, 14, 15) to which both telephone modules and computer systems can be coupled.

8. A telephony system according to any previous claim *characterized in that* the network is an asynchronous transfer mode (ATM) network.

9. Any novel and inventive feature or combination of features specifically disclosed herein within the meaning of Article 4H of the International Convention (Paris Convention).
